# DEMANDE DE BREVET EUROPEEN

(11) **EP 3 895 765 A1**
(43) Date de publication de la demande: **20.10.2021**
(21) Numéro de dépôt: 21168760.3
(22) Date de dépôt: 16.04.2021
(51) Int. Cl.: A63C 11/10, A63C 17/26, A63C 17/00, B62D 51/06, A63C 17/14

(54) **DISPOSITIF D'ASSISTANCE À LA PRATIQUE DU PATIN À ROULETTE**

(30) Priorité: 17.04.2020 FR 2003883
(71) Demandeur: Crestin, Joseph, 44120 Vertou (FR)
(72) Inventeur: Crestin, Joseph, 44120 Vertou (FR)
(74) Mandataire: Lequien, Philippe

(57) **Abrégé**

L'invention a pour objet un dispositif d'assistance à la pratique du patin à roulettes caractérisé en ce qu'il comprend une structure allongée présentant à une extrémité dite avant une roue éventuellement motrice et à son autre extrémité dite arrière un point d'ancrage de la structure allongée sur l'individu muni de patins à roulettes

## Description

L'utilisation de patins à roulettes nécessite de maitriser l'équilibre et également l'arrêt.

L'équilibre s'apprend avec le temps. Le freinage se fait soit en basculant un pied vers l'arrière pour appuyer sur le sol une excroissance que présente l'arrière du patin soit en plaçant son pied transversalement.

Les solutions évoquées ne sont pas satisfaisantes.

Après les vélos, les trottinettes et les planches à roulettes qui ont été motorisés, il existe une demande pour les patins à roulettes.

Par patin à roulettes on comprendra les patins comportant quatre roues disposées selon les quatre coins d'un rectangle ainsi que les patins avec des roulettes en ligne.

La première réflexion consiste à intégrer un moteur au niveau des roues.

Cela exige de revoir toute la conception de la chaussure et de trouver des moteurs qui pourraient être logés dans les roues.

Il est également connu les documents publiés sous les numéros FR 2 856 605 A1, WO 00/45909 A1, et WO 00/50131 A1, qui décrivent des appareils d'entrainement, d'exercice et d'assistance pour la pratique du patin à roulettes.

L'invention vise une autre solution.

A cet effet l'invention se rapporte à un dispositif d'assistance à la pratique du patin à roulettes pour un individu muni de patins à roulettes comprenant une structure allongée présentant à une extrémité dite avant une roue, éventuellement motrice, caractérisé en ce qu'à son autre extrémité dite arrière la structure allongée présente un point d'ancrage sur l'individu et cette structure présente des moyens de préhension permettant, en s'appuyant sur les dits moyens de préhension, d'accroitre la force qui s'exerce sur la roue et donc le contact de la roue avec le sol.

Par rapport aux dispositifs de l'état de la technique , le moyen de préhension est positionné entre le point d'ancrage arrière et la roue avant de sorte que l'utilisateur peut appuyer sur le moyen de préhension pour augmenter le contact de la roue avant avec le sol.

Les documents cités prévoient un ancrage sur l'individu lorsque le dispositif est monté propulseur et non tracteur, mais la position de cet ancrage par rapport aux moyens de préhension ne permet pas d'augmenter l'appui de la roue sur le sol.

On ne retrouve donc pas dans les documents cités cette disposition du moyen de préhension entre deux points d'appui.

Préférentiellement, le dispositif comprend les caractéristiques suivantes, considérées seules ou en combinaison :
- la structure allongée est obtenue avec deux profilés montés pour former un triangle dont la pointe avant porte la roue avec une entretoise maintenant les profilés ;
- le point d'ancrage est matérialisé dans le dos de l'individu ;
- le point d'ancrage est sur l'arrière d'un accessoire tel un harnais ;
- le point d'ancrage est sur l'avant de l'individu équipé des patins à roulettes ;
- les profilés sont prolongés par des tronçons conformés pour contourner l'individu ;
- le dispositif comprend un frein agissant sur la roue ;
- le dispositif comprend au moins une jambe suspendue et verrouillée sous la structure allongée, avec l'extrémité basse à distance du sol pendant l'utilisation, cette extrémité basse portant une roulette ou un ski ;
- le dispositif comprend un moteur.

L'invention sera bien comprise à l'aide de la description ci-après faite à titre d'exemple non limitatif en regard des dessins qui représentent :

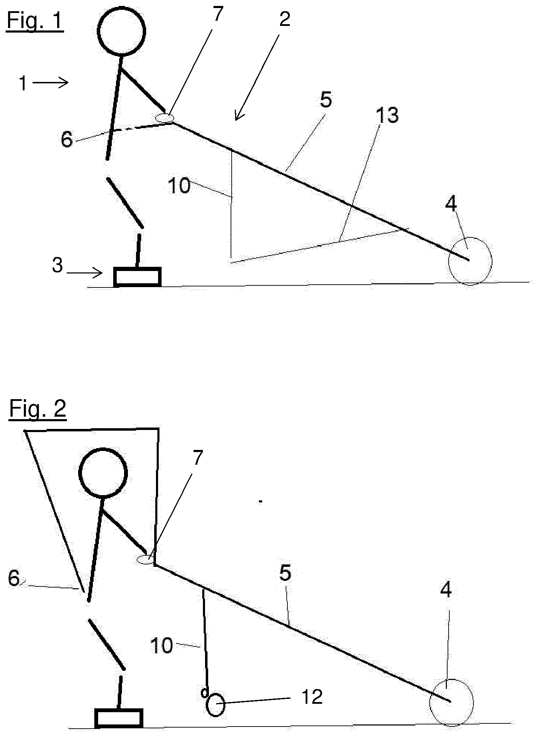

- figure 1 : l'invention en vue de côté, selon une première variante ;
- figure 2 : une deuxième variante de l'invention ;

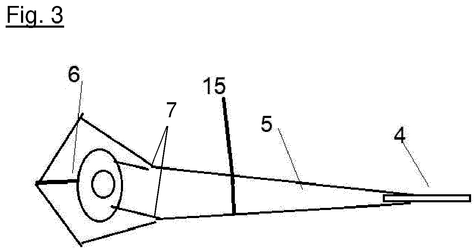

- figure 3 : une vue de dessus de la figure 2.

En se reportant au dessin, on voit un individu 1 chaussé de patins 3 à roulettes.

Un dispositif 2 d'assistance est utilisé par l'individu 1. A cet effet le dispositif comprend une roue 4 en contact avec le sol, cette roue est présentée à une extrémité dite avant d'une structure 5 rigide allongée qui présente à l'arrière un point 6 d'accrochage de ladite structure sur l'individu portant les patins à roulettes. La structure allongée présente des moyens 7 de préhension pour l'individu qui l'utilise d'une part, pour agir sur l'inclinaison de l'axe de rotation de la roue et d'autre part, sur la force qui s'exerce sur la roue.

Selon la première variante, le point d'ancrage 6 est matérialisé sur l'avant de l'utilisateur et les moyens de préhension permettent de moduler la force qui s'exerce sur la roue.

En effet la structure allongée s'appuie par sa partie arrière sur un point fixe qu'est l'individu et celui-ci peut appuyer sur la structure allongée par l'intermédiaire des moyens de préhension. Cela permet donc d'accroitre le contact de la roue avec le sol.

Selon la deuxième variante le point d'ancrage 6 est matérialisé dans le dos de l'utilisateur et par conséquence l'individu est dans le polygone de sustentation. Cette structure allongée permet de se rattraper lors d'un basculement vers l'avant.

La structure allongée peut être obtenue avec deux profilés montés pour former un triangle avec une entretoise 15 maintenant les profilés avec la pointe avant du triangle portant la roue.

Pour s'ancrer sur la face avant de l'individu les deux profilés se rejoignent et viennent s'accrocher sur un harnais ou un accessoire.

Pour la deuxième solution, on utilisera également un harnais et les profilés sont prolongés vers l'arrière soit en passant par les côtés de l'utilisateur soit en passant au-dessus.

Les profilés qui ici sont représentés droits sont prolongés par des tronçons conformés pour contourner l'individu.

Les moyens de préhension sont directement réalisés sur les profilés ou ils sont présentés sur des bras fixés sur les profilés Un frein sera monté pour être manipulé à la main. Ainsi lorsque l'individu descend trop vite, il peut agir sur la roue.

Selon un autre mode de réalisation non illustré et semblable à la deuxième solution, la structure allongée est obtenue avec un unique profilé qui se prolonge vers l'arrière en passant soit par l'un des côtés de l'utilisateur, soit en passant au-dessus de l'individu.

Avantageusement, le dispositif est équipé d'un moteur qui, sera monté , de préférence dans la roue.

Tout autre forme de structure allongée peut convenir.

Cette solution a l'avantage d'être indépendante des patins à roulettes. Elle pourrait fonctionner avec des planches à roulettes etc.

Au moins une jambe 10 est suspendue et verrouillée sous la structure allongée, avec l'extrémité basse à distance du sol pendant l'utilisation pour prendre appui au sol lorsque l'individu perd l'équilibre vers l'avant.

Cette jambe présente à son extrémité basse un ski (non représenté) ou une roulette 12.

La jambe est par exemple verrouillée par une entretoise 13 fixée à la base de la jambe ainsi que sur la structure allongée à proximité de la roue.

## Revendications

1. Dispositif (2) d'assistance à la pratique du patin à roulettes pour un individu (1) muni de patins (3) à roulettes comprenant une structure (5) allongée présentant à une extrémité dite avant une roue (4) **caractérisé en ce qu'**à son autre extrémité dite arrière la structure (5) allongée présente un point (6) d'ancrage sur l'individu (1) et cette structure (5) présente des moyens (7) de préhension permettant, en s'appuyant sur les dits moyens (7) de préhension, d'accroitre la force qui s'exerce sur la roue (4) et donc le contact de la roue (4) avec le sol.

2. Dispositif (2) d'assistance à la pratique du patin à roulettes selon la revendication 1 **caractérisé en ce que** la structure (5) allongée est obtenue avec deux profilés montés pour former un triangle dont la pointe avant porte la roue (4) avec une entretoise (15) maintenant les profilés.

3. Dispositif (2) d'assistance à la pratique du patin à roulettes selon la revendication 1 **caractérisé en ce que** le point (6) d'ancrage est matérialisé dans le dos de l'individu (1).

4. Dispositif (2) d'assistance à la pratique du patin à roulettes selon la revendication 3 **caractérisé en ce que** le point (6) d'ancrage est sur l'arrière d'un accessoire tel un harnais.

5. Dispositif (2) d'assistance à la pratique du patin à roulettes selon la revendication 3 **caractérisé en ce que** le point (6) d'ancrage est sur l'avant de l'individu (1) équipé des patins (3) à roulettes.

6. Dispositif (2) d'assistance à la pratique du patin à roulettes selon la revendication 2 **caractérisé en ce que** les profilés sont prolongés par des tronçons conformés pour contourner l'individu (1).

7. Dispositif (2) d'assistance à la pratique du patin à roulettes selon l'une quelconque des revendications 1 à 6 **caractérisé en ce que** le dispositif (2) comprend un frein agissant sur la roue.

8. Dispositif (2) d'assistance à la pratique du patin à roulette selon l'une quelconque des revendication 1 à 7 **caractérisé en ce qu'**il comprend au moins une jambe (10) suspendue et verrouillée sous la structure allongée, avec l'extrémité basse à distance du sol pendant l'utilisation, cette extrémité basse portant une roulette (12) ou un ski.

9. Dispositif (2) d'assistance à la pratique du patin à roulettes selon l'une quelconque des revendications 1 à 8 **caractérisé en ce qu'**il comprend un moteur.
